# EUROPEAN PATENT SPECIFICATION

(11) **EP 1 428 699 B1**
(45) Date of publication and mention of the grant of the patent: **20.04.2005**
(21) Application number: 02425771.9
(22) Date of filing: 13.12.2002
(51) Int. Cl.: B60H 1/00

(54) **Control unit for an air distribution and treatment assembly for vehicles**
Steuerung für eine Luftverteilungsanlage und Behandlungsanlage für Fahrzeuge
Commande de distribution et de traitement d'air pour véhicules

(43) Date of publication of application: 16.06.2004
(73) Proprietor: DENSO THERMAL SYSTEMS S.p.A., 10046 Poirino (Torino) (IT)
(72) Inventor: Ferrarese, Claudio, 10137 Torrazza Piemonte (Torino) (IT)
(74) Representative: Marchitelli, Mauro

(56) References cited:
- FR-A- 2 360 129
- FR-A- 2 366 951
- US-A- 4 995 554

## Description

The present invention relates to a control unit for an air-distribution-and-treatment assembly for vehicles.

The document US-A-4995554 describes a control unit for an air-distribution-and-treatment assembly for vehicles, having the characteristics forming the subject of the preamble of the main claim. This document describes a control unit comprising a casing with two coaxial rotary control knobs which project outside the casing and two coaxial shafts fixed in rotation to the two knobs. The two knobs have the purpose of controlling the temperature and distribution of a flow of air inside a vehicle. The control unit is also provided with a fixed intermediate sleeve set between the two control shafts for preventing any interaction between the two control knobs.

A control unit with two coaxial rotating knobs must have the knobs of dimensions sufficiently large for them to be gripped and rotated easily by the user. The fact of providing knobs projecting from a front surface of the dashboard of a vehicle represents a problem from the point of view of safety. In fact, inside the passenger compartment of a vehicle there should not be present any rigid projecting bodies located in front of the driver or passenger, in order to reduce any risk of injury to the occupants of the vehicle in the event of accident.

The purpose of the present invention is to provide a control unit with coaxial rotating knobs for an assembly for treating and distributing air for vehicles which will enable greater guarantees to be obtained from the point of view of safety of the occupants of the vehicle.

According to the present invention, the said purpose is achieved by a control unit having the characteristics forming the subject of the main claim.

The present invention will now be described in detail with reference to the attached drawings, which are provided purely by way of non-limiting example and in which:
- Figure 1 is a front elevation of a control unit according to the present invention;
- Figure 2 is a cross section taken along the line II-II of Figure 1; and
- Figure 3 is a cross-sectional view corresponding to Figure 2 illustrating the condition in which the knobs are set back inside the casing following upon impact.

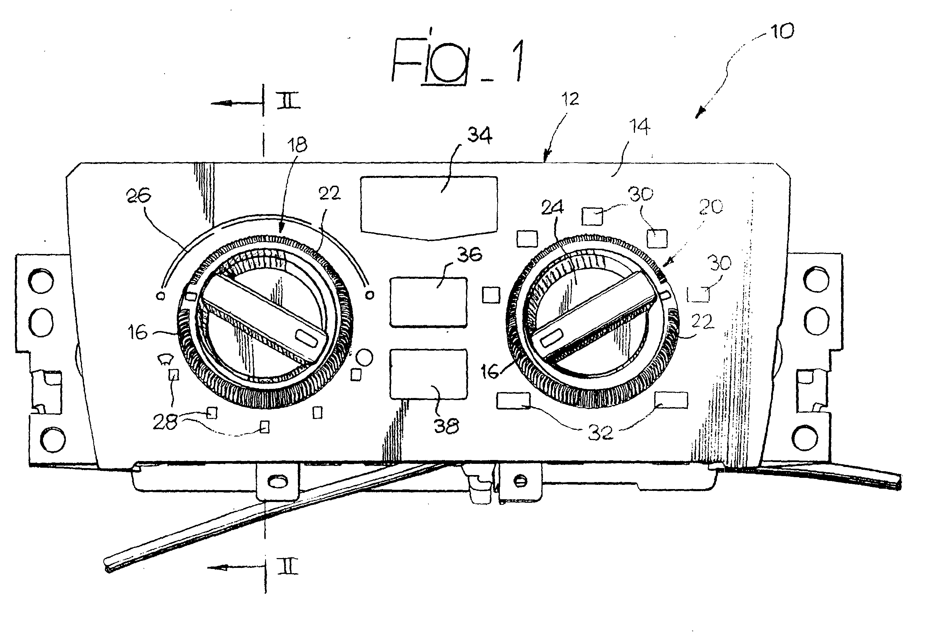

With reference to Figure 1, the number 10 designates a control unit for an air-distribution-and-treatment assembly for vehicles. The control unit 10 comprises a substantially box-shaped casing 12 designed to be fixed to a front wall of the dashboard of a vehicle (not illustrated). The casing 12 comprises a front panel 14 provided with two circular openings 16, through which there project two rotating control assemblies 18, 20. Each control assembly 18, 20 comprises an external rotating knob 22 and an internal rotating knob 24 set coaxially with respect to one another.

The front panel 14 has, at each control assembly 19, 20, two sets of graphic indications. The graphic indications for the control assembly 18 are designated by 26 and 28 and indicate, respectively, the temperature selected of the flow of air and the speed of rotation of the electric fan. The graphic indications for the control assembly 20 are designated, respectively, by 30 and 32 and refer, respectively, to the air-flow distribution and the intake of the flow (circulating air or external air intake). The external knob 22 of the control assembly 18 controls the temperature of the flow of air, and the internal knob 24 controls the speed of rotation of the electric fan. The external knob 22 of the control assembly 20 controls the air-flow distribution inside the passenger compartment, and the internal knob 24 of the control assembly 20 controls the position of intake of the flow (circulating air or external air intake).

Once again with reference to Figure 1, in the control panel 14 there may be provided seats 34, 36 and 38 for electrical control switches, for example for controlling the emergency lights of the vehicle, for activation and de-activation of the compressor of the air-conditioning system, and for controlling the device for defrosting the rear window, respectively.

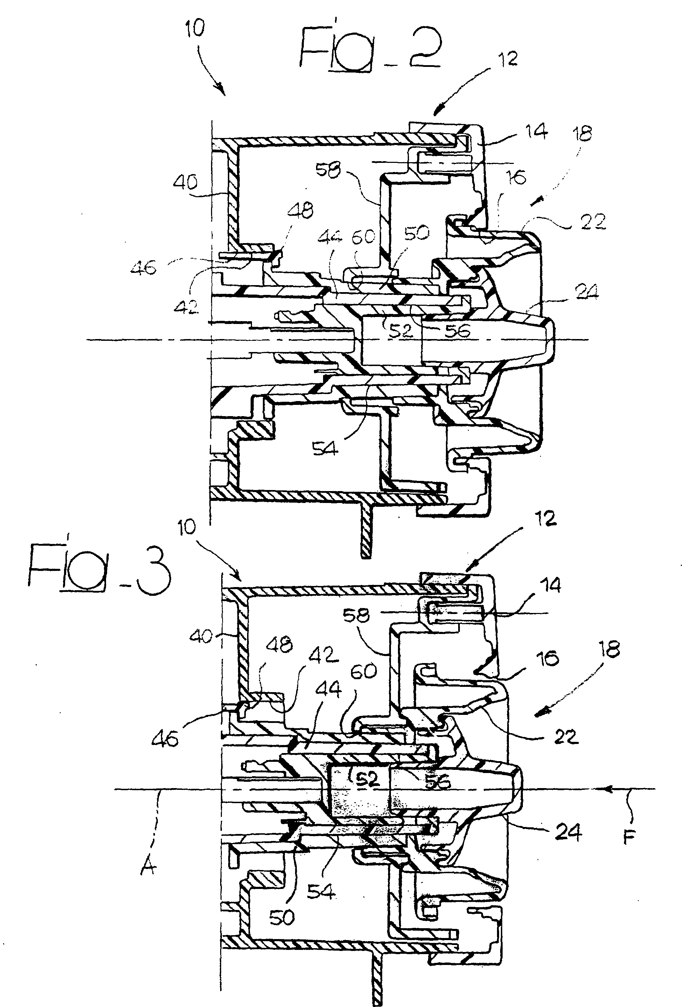

With reference to Figures 2 and 3, the casing 12 comprises a supporting wall 40 having a through opening 42, through which there extends a supporting tubular sleeve 44 preferably made of injection-moulded plastic material. The tubular sleeve 44 is provided with elastically deformable portions 46, which engage the through opening 42. Each of the elastically deformable portions 46 is provided with a tooth 48, which interferes with a front edge of the through opening 42.

The rotary control assembly 18 comprises an external control shaft 50 and an internal control shaft 52. The external control shaft is mounted so that it can turn on an external surface 52 of the supporting tubular sleeve 44 and is fixed, for example by means of snap-action fit, to the external knob 22. The internal control shaft 52 is supported in rotation by an internal surface 56 of the tubular sleeve 44 and is fixed, for example by means of snap-action fit, to the internal knob 24. The control shafts 50, 52 are connected to respective control or adjustment devices (not illustrated), which do not fall within the scope of the present invention.

Preferably, the box-like casing 12 comprises a front supporting wall 58 having an opening 60, within which is supported in rotation the external control shaft 50. Figure 2 illustrates the position of normal use of the unit 10. In this condition, the knobs 22 and 24 project outside the front panel 14 and are freely rotatable independently of one another about their common axis A. The supporting tubular sleeve 44 in this condition is fixed with respect to the casing 12.

According to the present invention, the supporting sleeve 44 is connected to the supporting casing 12 so as to be able to move along the axis A under the action of a force having a pre-set value. As illustrated in Figure 3, when an axial force F of a value higher than the pre-set threshold value acts upon the rotating knobs 22, 24, the entire control assembly 18 made up of the knobs 22, 24, the control shafts 50, 52, and the supporting tubular sleeve 44 moves in the direction of the force F. The sleeve 44 is disengaged from the opening 42 when the axial force F overcomes the elastic resistance of the elastically deformable portions 46 necessary for causing the teeth 48 to pass inside the opening 42. As may be seen in Figure 3, the entire control assembly 18 is built so as to shift backwards under the force F, without causing failure of any component. Following upon impact, which has produced shifting-back of the knobs 22, 24, functionality of the assembly can be re-established by pushing forward the supporting sleeve 44 and without the need for replacing parts or components.

From the foregoing description it will be readily understood that the control unit according to the present invention enables an increase in safety both for the driver and for the passengers of the vehicle since it reduces the risk of injury or bruises following upon accidents caused by bumping against projecting parts of the dashboard. The force necessary for shifting the rotating knobs backwards inside the casing is determined so that the knobs 22, 24 can shift backwards only following upon impact that is able to injure an occupant of the vehicle in the event of failure of the assembly to shift backwards.

## Claims

1. A control unit for an air-distribution-and-treatment assembly for vehicles, comprising:
- a supporting casing (12);
- a supporting tubular sleeve (44), connected to the supporting casing (12);
- an external rotating knob (22) and an internal rotating knob (24), set coaxial with respect to one another;
- an external control shaft (50), mounted so that it can turn on an external surface (54) of the supporting tubular sleeve (44) and fixed to the external rotating knob (22); and
- an internal control shaft (52), which is mounted so that it can turn on an internal surface (56) of the supporting tubular sleeve (44) and is fixed to the internal rotating knob (24),
**characterized in that** the supporting tubular sleeve (44) is connected to the supporting casing (12) by means of connecting means (46, 48) which can be disengaged under the action of a predetermined axial force so that the assembly (18, 20) comprising the tubular sleeve (44), the rotating knobs (22, 24) and the two control shafts (50, 52) is able to move with respect to the supporting casing (12) between an extracted position and a set-in position under the action of a predetermined force (F) acting on the rotating knobs (22, 24).

2. The control unit according to Claim 1, **characterized in that** said disengageable connecting means comprise a plurality of elastically deformable portions (46), which are integral with the tubular sleeve (44) and engage a through opening (42) of a supporting wall (40) of the supporting casing (12).

3. The control unit according to Claim 2, **characterized in that** said elastically deformable portions (46) are provided with respective teeth (48), which establish an interference with a front edge of said through opening (42).

4. The control unit according to Claim 2, **characterized in that** the supporting casing (12) comprises a front supporting wall (58) having a through opening (60), which is engaged in rotation by said external control shaft (50).

## Patentansprüche

1. Steuerung für eine Luftverteilungs- und -behandlungsanlage für Fahrzeuge, umfassend:
- ein tragendes Gehäuse (12);
- eine rohrförmige Aufnahmehülse (44), die mit dem tragenden Gehäuse (12) verbunden ist;
- einen äußeren Drehknopf (22) und einen inneren Drehknopf (24), die konzentrisch zueinander angeordnet sind;
- eine äußere Steuerwelle (50), die so montiert ist, dass sie auf einer Außenfläche (54) der rohrförmigen Aufnahmehülse (44) umlaufen kann und an dem äußeren Drehknopf (22) befestigt ist; und
- eine innere Steuerwelle (52), die so montiert ist, dass sie auf einer Innenfläche (56) der rohrförmigen Aufnahmehülse (44) umlaufen kann und an dem inneren Drehknopf (24) befestigt ist,
**dadurch gekennzeichnet, dass**
die rohrförmige Aufnahmehülse (44) mit dem tragenden Gehäuse (12) mittels Verbindungsmitteln (46, 48) verbunden ist, die unter Einwirkung einer vorbestimmten Axialkraft gelöst werden können, so dass die Anordnung (18, 20) umfassend die rohrförmige Hülse (44), die Drehknöpfe (22, 24) und die zwei Steuerwellen (50, 52) in der Lage ist, sich unter Einwirkung einer auf die Drehknöpfe (22, 24) wirkenden vorbestimmten Kraft (F) zwischen einer herausgezogenen Stellung und einer eingesetzten Stellung bezüglich des tragenden Gehäuses (12) zu bewegen.

2. Steuerung gemäß Anspruch 1, **dadurch gekennzeichnet, dass** die lösbaren Verbindungsmittel eine Vielzahl von elastisch verformbaren Abschnitten (46) umfassen, die einstückig mit der rohrförmigen Hülse (44) sind und an einer Durchgangsöffnung (42) einer Stützwand (40) des tragenden Gehäuses (12) angreifen.

3. Steuerung gemäß Anspruch 2, **dadurch gekennzeichnet, dass** die elastisch verformbaren Abschnitte (46) mit jeweiligen Zähnen (48) versehen sind, die einen Eingriff mit einer Vorderkante der Durchgangsöffnung (42) herstellen.

4. Steuerung gemäß Anspruch 2, **dadurch gekennzeichnet, dass** das tragende Gehäuse (12) eine vordere Stützwand (58) mit einer Durchgangsöffnung (60) umfasst, in welche die äußere Steuerwelle (50) beim Drehen eingreift.

## Revendications

1. Commande pour un ensemble de traitement et de distribution d'air pour véhicules, comprenant :
un boîtier de support (12) ;
un manchon de support tubulaire (44) raccordé au boîtier de support (12) ;
un bouton rotatif externe (22) et un bouton rotatif interne (24), réglés de manière coaxiale l'un par rapport à l'autre ;
un arbre de commande externe (50) monté de sorte qu'il peut tourner sur une surface externe (54) du manchon de support tubulaire (44) et fixé sur le bouton de rotation externe (22) ; et
un arbre de commande interne (52) qui est monté de sorte qu'il peut tourner sur une surface interne (56) du manchon de support tubulaire (44) et est fixé sur le bouton rotatif interne (24),
**caractérisée en ce que** le manchon de support tubulaire (44) est raccordé au boîtier de support (12) à l'aide de moyens de raccordement (46, 48) qui peuvent être dégagés sous l'action d'une force axiale prédéterminée de sorte que l'ensemble (18, 20) comprenant le manchon tubulaire (44), les boutons rotatifs (22, 24) et les deux arbres de commande (50, 52), peut se déplacer par rapport au boîtier de support (12) entre une position en saillie et une position enfoncée sous l'action d'une force prédéterminée (F) qui agit sur les boutons rotatifs (22, 24).

2. Commande selon la revendication 1, **caractérisée en ce que** lesdits moyens de raccordement pouvant se dégager comprennent une pluralité de parties élastiquement déformables (46), qui sont solidaires du manchon tubulaire (44) et mettent en prise une ouverture débouchante (42) d'une paroi de support (40) du boîtier de support (12).

3. Commande selon la revendication 2, **caractérisée en ce que** lesdites parties élastiquement déformables (46) sont prévues avec des dents (48) respectives qui établissent une interférence avec un bord avant de ladite ouverture débouchante (42).

4. Commande selon la revendication 2, **caractérisée en ce que** le boîtier de support (12) comprend une partie de support avant (58) ayant une ouverture débouchante (60), qui est mise en prise en rotation par ledit arbre de commande externe (50).
